# EUROPEAN PATENT APPLICATION

(11) **EP 1 439 048 A1**
(43) Date of publication of application: **21.07.2004**
(21) Application number: 04250263.3
(22) Date of filing: 20.01.2004
(51) Int. Cl.: B29C 47/10, B29C 47/40

(54) **Method of producing a rubber composition**

(30) Priority: 20.01.2003 JP 2003011170
(71) Applicant: BRIDGESTONE CORPORATION, Tokyo 104-0031 (JP)
(72) Inventor: Someno, Kazuaki c/o Bridgestone Corporation, Kodaira City Tokyo (JP); Yanagisawa, Kazuhiro, Kodaira City, Tokyo (JP)
(74) Representative: Whalley, Kevin

(57) **Abstract**

A rubber composition is produced by mixing a curing agent with a curable rubber composition having a particular composition in a continuous mixing machine.

## Description

### BACKGROUND OF THE INVENTION

### 1. Field of the Invention

This invention relates to a method of producing a rubber composition as a starting material for a rubber article as well as a method of producing a rubber article.

### 2. Description of Related Art

Rubber articles such as various types of tires, industrial belts and the like are usually produced by extruding a rubber composition, which is obtained by mixing various ingredients according to a given compounding recipe, into a given shape or further laminating various materials extruded into a given shape one upon the other and thereafter subjecting to a curing treatment.

In the above production of the rubber article, the mixing step of compounding chemicals, carbon black, oil and the like with rubber component(s) to form a given rubber composition is a very important working step because the mixing of the rubber composition exerts on the performances of the resulting rubber article.

In the conventional mixing step, it is general that solid uncured rubber component(s) is mixed with a filler such as carbon black or the like, and chemicals such as stearic acid, an antioxidant and the like in an internal mixer (a closed type mixing machine) such as a Banbury mixer or the like and shaped into a sheet through rolls and cooled, and thereafter the sheet is again charged into the internal mixer and mixed with curing chemicals such as vulcanization accelerator, sulfur and the like and then shaped into a sheet through rolls.

In the use of the closed type mixing machine represented by the Banbury mixer, the mixed mass adheres closely to the interior of the mixing machine, or the mixed mass is liable to be easily adhered to the rolls in the formation of the sheet and it is difficult to form the sheet, so that it comes into problem that a great labor is required in the production of the rubber composition through the mixing and the productivity becomes poor. Particularly, the above phenomenon becomes conspicuous when a curing agent is mixed with a rubber composition containing a greater amount of styrene-butadiene rubber as a rubber component and a greater amount of a softening agent. Also, the dispersibility of the curing chemicals in the resulting rubber composition is insufficient. For this end, it is strongly demanded to improve the mixing step.

In this connection, JP-A-5-154835 discloses that the dispersibility is improved by using a continuous twin screw mixing machine of a specified system under an exemplification of styrene-butadiene rubber. Also, JP-A-6-210627 discloses a method of producing rubber by using a specified continuous mixing machine. Further, JP-A-11-179785 discloses that silica and a silane coupling agent are compounded at a specified temperature condition in a continuous mixing machine under an exemplification of styrene-butadiene rubber.

These conventional techniques utilize the dispersibility of additives for rubber through the continuous mixing machine, the continuity of the production method and the temperature controllability, but do not mention the adhesion of the mixed mass in the mixing machine at all. Also, they do not concretely disclose the amounts of the reinforcing filler and the softening agent.

### SUMMARY OF THE INVENTION

It is, therefore, an object of the invention to provide a method of particularly improving the workability in the production of the rubber composition through the mixing.

That is, the invention is as follows.

(1) A method of producing a rubber composition which comprises mixing a curing agent with a curable rubber composition comprising at least 70 mass% of styrene-butadiene rubber having 20-60 mass% of a bound styrene content and containing not less than 60 parts by weight of a reinforcing filler and not less than 50 parts by weight of a softening agent extractable with acetone-chloroform after curing, based on 100 parts by weight of a rubber component, in a continuous mixing machine.

(2) A method of producing a rubber composition according to the item (1), wherein the continuous mixing machine has a plurality of feeding ports.

(3) A method of producing a rubber composition according to the item (1) or (2), wherein the continuous mixing machine has twin screws.

(4) A method of producing a rubber composition according to the item (3), wherein the twin screws of the continuous mixing machine are rotated in the same direction.

(5) A method of producing a rubber composition according to any one of the items (1) to (4), wherein the curing agent is charged into the continuous mixing machine from a feeding port other than a feeding port for the reinforcing filler and mixed therein.

(6) A method of producing a rubber composition according to the item (5), wherein the curing agent is charged from the feeding port nearer than the feeding port for the reinforcing filler to an outlet of the continuous mixing machine.

(7) A method of producing a rubber article which comprises extruding a rubber composition obtained by the method described in any one of the items (1) to (6) into a given shape.

### DETAINED DESCRIPTION OF THE INVENTION

The production method of the rubber composition according to the invention is a method of realizing the mixing under an excellent workability for rubber compositions, which become particularly an issue in the mixing through the conventional closed type mixing machine. That is, the invention is very effective to rubber compositions relatively difficult in the mixing. In other words, the rubber composition to be targeted in the invention is a rubber composition comprising at least 70 mass% of styrene-butadiene rubber having 20-60 mass% of a bound styrene content and containing not less than 60 parts by weight of a reinforcing filler and not less than 50 parts by weight of a softening agent extractable with acetone-chloroform after curing based on 100 parts by weight of a rubber component.

The rubber composition having such a compounding recipe has a problem in the mixing as previously mentioned that the mixed mass adheres closely to the interior of the mixing machine, or the mixed mass is liable to be easily adhered to the rolls in the formation of the sheet and it is difficult to form the sheet and hence a great labor is required in the production of the rubber composition through the mixing and the productivity becomes poor.

As the reinforcing filler, mention may be made of carbon black, silica and the like. As the softening agent, mention may be made of process oil, various aliphatic acid esters, phosphoric acid esters, low molecular weight polymers, cumarone indene resin and the like.

In the invention, it is important that the curing agent is mixed in the continuous mixing machine in case of mixing the above rubber composition.

The "continuous mixing machine" is a so-called mixing extruder using a screw wherein the mixing and the extrusion are simultaneously carried out by the screw. Therefore, there are various advantages that the residence time of the rubber composition in the mixing machine becomes long and various additives may be fed on the way of the extrusion course, and so on.

Even in the rubber composition having a compounding recipe inconvenient in the mixing, a good productivity can be obtained by using the above continuous mixing machine without closely adhering rubber to an inner wall of the mixing machine or the rolls, and also a good dispersibility of the curing chemicals can be attained.

The continuous mixing machine is preferable to have a plurality of feeding ports, whereby various additives can be separately fed on the way of the mixing. That is, the mixing in the continuous mixing machine can be conducted by separately feeding a filler such as carbon black or the like and chemicals including a curing agent from the respective feeding devices to a hopper arranged in the mixing machine. In this case, it is desirable to feed the curing agent and vulcanization accelerator from another hopper separately arranged at a downstream side of the mixing machine. Also, one or more feeding devices of the chemicals can be used, if necessary.

It is preferable that the curing agent is charged into the continuous mixing machine from a feeding port nearer than a feeding port for the reinforcing filler to an outlet of the mixing machine and mixed therein. In this way, the rubber composition having a good dispersibility can be obtained without causing the deterioration through scorching.

Also, after materials other than the curing chemicals are previously mixed in the closed type mixing machine, the curing agent may be mixed in the continuous mixing machine.

The continuous mixing machine is preferable to have twin screws because the twin screws are excellent in the mixing property as compared with the single screw. Moreover, the twin screws rotating in different directions are excellent in the mixing property and the biting of the rubber sheet as compared with the twin screws rotating in the same direction, but have a demerit that mechanical troubles are easily caused. On the other hand, the twin screws rotating in the same direction have a merit that the self-cleaning property is excellent as to the workability. In the invention, therefore, it is recommended to use a continuous mixing machine of such a type that twin screws are rotated in the same direction. The action of the above continuous mixing machine can be further promoted by conducting the mixing in this type of the mixing machine.

Furthermore, various rubber members having a desired profile can be continuously produced by extruding the rubber composition obtained according to the method of the invention into a given shape through a die head attached to the outlet of the continuous mixing machine and having a desired shape. The thus obtained rubber member is cut into a required length and coiled and then supplied to a subsequent step.

The following example is given in illustration of the invention and is not intended as limitation thereof.

A rubber composition is prepared by two-stage mixing as mentioned below.

### First stage:

Styrene-butadiene rubber having a bound styrene content of 35 mass%, carbon black and various chemicals are mixed according to a compounding recipe shown in Table 1 in a Banbury mixer by a usual manner and shaped into a sheet through rolls.

**Table 1**

| (parts by weight) | |
|---|---|
| Styrene-butadiene rubber (*1) | 100 |
| Carbon black N110 (*2) | 90 |
| Aromatic petroleum resin (*3) | 20 |
| Process oil | 70 |
| Stearic acid | 2 |
| Antioxidant 6C (*4) | 2 |

| | |
|---|---|
| *1: SBR #0120, made by JSR Corporation (styrene content: 35 mass%) | |
| *2: Seast 9, made by Tokai Carbon Co., Ltd. | |
| *3: Neopolymer 100, made by Shin-Nippon Sekiyu Kagaku Co., Ltd. | |
| *4: N-(1,3-dimethylbutyl)-N'-phenyl-p-phenylenediamine | |

### Second stage:

The sheet obtained in the first mixing stage is cut into pieces having a width of 2 cm and a length of 3 cm, which are charged into a continuous mixing machine of twin screws rotating in the same direction (KTX30, trade name, made by Kobe Steel, Ltd.) from a hopper arranged at an upstream side of the mixing machine through a feeding device and various chemicals shown in Table 2 are charged from a side feed compactor arranged at a downstream side of the mixing machine and mixed in the mixing machine.

**Table 2**

| (parts by weight) | |
|---|---|
| Zinc white | 4 |
| Vulcanization accelerator DPG (*5) | 1 |
| Vulcanization accelerator CZ (*6) | 1.5 |
| Sulfur | 1.5 |

| | |
|---|---|
| *5: 1,3-diphenyl guanidine | |
| *6: N-cyclohexyl-2-benzothiazyl sulfenamide | |

The thus obtained rubber composition is cured and then the dispersibility of the additive is evaluated from an X-value of RCB method using a dispergrader (made by TECH PRO Corp. in USA), in which the larger the numerical value, the better the dispersibility.

For the comparison, a similar rubber composition is prepared by using a closed type Banbury mixer at the first and second mixing stages in the usual manner and cured in the same manner as mentioned above and then the dispersibility of the additive is evaluated in the same manner as mentioned above.

Further, 600 g of the rubber composition is charged and mixed at the second mixing stage in the above mixing step and thereafter the weight of rubber recovered is measured. In the comparative example using the closed type Banbury mixer, the recovery weight is 535 g, and the remaining non-recovered rubber closely adheres to the inner wall or the roll, while in the invention example using the continuous mixing machine of twin screws rotating in the same direction, 598 g of rubber approximately equal to the charged amount of rubber can be recovered.

These evaluation results are shown in Table 3 together.

**Table 3**

| | Invention Example | Comparative Example |
|---|---|---|
| Workability | ○ | × |
| Dispersibility of additive | 6.8 | 4.2 |

As mentioned above, according to the invention, the workability in the production of the rubber composition through mixing can be largely improved as compared with the case of mixing through the conventional closed type mixing machine. Also, since the continuous mixing machine is used, it is possible to complete the extrusion shaping at the outlet side of the mixing machine, so that there is a merit that both the working space and working time are saved as compared with the case of conducting the extrusion shaping at the extrusion step after the mixing.

## Claims

1. A method of producing a rubber composition which comprises mixing a curing agent with a curable rubber composition comprising at least 70 mass% of styrene-butadiene rubber having 20-60 mass% of a bound styrene content and containing not less than 60 parts by weight of a reinforcing filler and not less than 50 parts by weight of a softening agent extractable with acetone-chloroform after curing, based on 100 parts by weight of a rubber component, in a continuous mixing machine.

2. A method of producing a rubber composition according to claim 1, wherein the continuous mixing machine has a plurality of feeding ports.

3. A method of producing a rubber composition according to claim 1 or 2, wherein the continuous mixing machine has twin screws.

4. A method of producing a rubber composition according to claim 3, wherein the twin screws of the continuous mixing machine are rotated in the same direction.

5. A method of producing a rubber composition according to any one of claims 1 to 4, wherein the curing agent is charged into the continuous mixing machine from a feeding port other than a feeding port for the reinforcing filler and mixed therein.

6. A method of producing a rubber composition according to claim 5, wherein the curing agent is charged from the feeding port nearer than the feeding port for the reinforcing filler to an outlet of the continuous mixing machine.

7. A method of producing a rubber article which comprises extruding a rubber composition obtained by the method as claimed in any one of claims 1 to 6 into a given shape.
